# EUROPEAN PATENT APPLICATION

(11) **EP 1 050 982 A1**
(43) Date of publication of application: **08.11.2000**
(21) Application number: 00303765.2
(22) Date of filing: 04.05.2000
(51) Int. Cl.: H04B 10/08

(54) **Optical coupler and circuit employing an optical coupler**

(30) Priority: 07.05.1999 JP 12698499
(71) Applicant: NEC CORPORATION, Tokyo (JP)
(72) Inventor: Yamaguchi, Shohei, NEC Corporation, Tokyo (JP)
(74) Representative: Orchard, Oliver John

(57) **Abstract**

To one port of a 2x2 optical coupler (3a) are connected an attenuator (4a), an optical grating (5a) and an optical terminator (6a) in cascade. The optical coupler causes an incident light beam to be branched into two branched beams, and outputs one branched beam and a beam of a specific wavelength from different respective ports. An optical loop-back circuit is provided with two of such optical couplers and an optical fiber for connecting them. One of the optical couplers is installed in an upward optical fiber transmission path (2a) and the other in a downward optical fiber transmission path (2b). From a main signal light and a monitoring signal light, the optical loop-back circuit returns to a terminal station only the monitoring signal light via the opposite optical fiber transmission path. As a result, the terminal station can monitor the optical fiber transmission path and so forth at the same time as receiving the main signal light.

## Description

The present invention relates to an optical coupler and to a circuit employing an optical coupler. An optical coupler is described below, by way of example in illustration of the invention, employed with an optical loop-back circuit for installation in optical fiber transmission paths.

In a previously proposed optical transmission system, in order to ensure normal propagation of the signal light, a terminal station delivers a monitoring signal light to an optical fiber path to monitor the states of both the transmission path and the optical repeater. In Japanese Patent Application Laid-open No. 204949/1994 there is disclosed an optical loop-back circuit for monitoring optical fiber transmission paths and optical repeaters. The monitoring signal light delivered by a terminal station in the previously proposed circuit travels via an optical loop-back circuit and an opposite optical fiber transmission path and returns to the terminal station. This optical loop-back circuit is provided with two 2x2 optical couplers, one for each of a pair of optical transmission paths. These 2x2 optical couplers are connected by two optical fibers. Each optical fiber is associated with an optical attenuator. The terminal station delivers a main signal light and a monitoring signal light to an upward optical transmission path. These lights become incident to a first 2x2 optical coupler and are caused to be branched into two branched beams. One of these branched beams propagates as it is via the optical transmission path. The other branched beam is attenuated by the optical attenuator, and enters into a second 2x2 optical coupler installed on a downward optical transmission path. This second 2x2 optical coupler couples the branched beam with its signal lights which is being propagated via the downward optical transmission path, and sends them together to the terminal station. The terminal station receives the monitoring signal light, and uses it for monitoring the optical transmission path, the optical repeater and the like.

However, in an optical transmission system having a loop-back circuit as described above, the main signal light also returns to the terminal station together with the monitoring signal light. As a consequence, this main signal light tends to interfere with another signal light being propagated via the downward optical transmission path and their levels are brought down. If the attenuation rate of the optical attenuator is set high, the occurrence of these problems can be minimised to some extent, but this tends to reduce the level of the turned back monitoring signal light, so that the terminal station requires an extremely sensitive and precise receiving circuit. In the above-described optical transmission system, it is difficult for a terminal station to monitor the optical fiber transmission paths while communicating with another terminal station.

A feature of an optical coupler for use with an optical loop-back circuit to be described below, by way of example in illustration of the invention, is that it makes possible the monitoring of optical transmission paths and optical repeaters with a monitoring signal light without adversely affecting the receipt of the main signal lights.

A particular optical coupler to be described below by way of example in illustration of the invention has an optical attenuator and a reflecting unit for reflecting light of a specific wavelength band. A 2x2 optical coupler having four input/output ports can be used as this optical coupler. To one of the input/output ports of this optical coupler are connected the optical attenuator and the reflecting unit for reflecting lights of a specific wavelength band in cascade. To this input/output port there can be connected in cascade a plurality of reflecting units, each for reflecting light in a different wavelength band. Optical gratings are used as the reflecting unit in this particular example.

A particular optical loop-back circuit to be described below, by way of example in illustrating the invention has optical couplers such as were described above, one disposed on each of two optical fiber transmission paths, upward and downward, and an optical fiber providing a connection between them. Each optical coupler is connected to the optical fiber transmission paths by its two input/output ports, and is connected to the optical fiber at one of the input/output ports. Each optical coupler branches the signal lights which enter it into two branched signal beams, and supplies one of the branched signal beams to an optical fiber transmission path and the other to the input/output port to which a reflecting unit or units are connected. The two optical couplers can share one reflecting unit. Furthermore, various optical fiber transmission paths can be configured on which the optical loop-back circuit is arranged. By arranging the optical couplers and the optical loop-back circuit on each optical fiber transmission path, the optical transmission path and the optical repeater can be precisely monitored without adversely affecting the main signal lights.

The following description and drawings show a previously proposed arrangement, and with reference to Figs. 2 to 5, by way of example, arrangements which are illustrative of the invention, whose scope of protection is determined by the appended claims.

In the drawings:-
FIG. 1 is a block schematic circuit diagram of a previously proposed optical loop-back circuit,
FIG. 2 is a block schematic circuit diagram of optical couplers and an optical loop-back circuit,
FIG. 3 is a block schematic circuit diagram of optical fiber transmission paths to which an optical loop-back circuit is applied,
FIG. 4 is a block schematic circuit diagram of optical couplers and an optical loop-back circuit, and
FIG. 5 is a block schematic circuit diagram of an optical loop-back circuit.

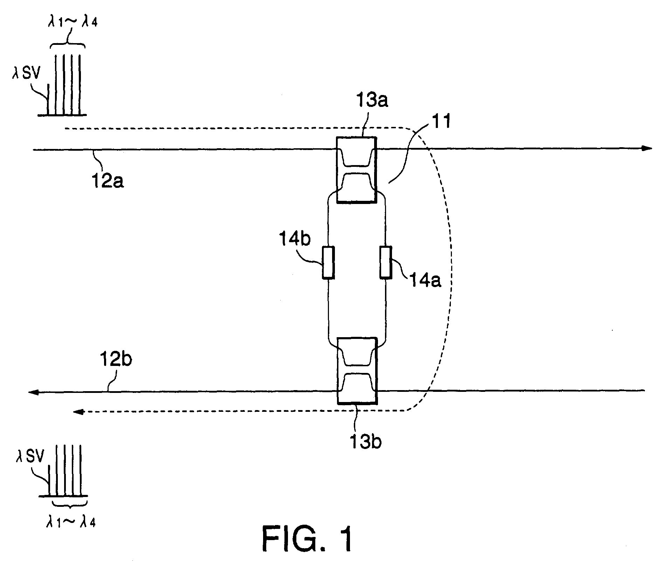

Referring to FIG. 1, there is shown a previously proposed optical loop-back circuit 11 installed between upward and downward optical fiber transmission paths l2a and 12b. This circuit 11 has a 2x2 optical coupler 13a on the upward optical fiber transmission path 12a and another 2x2 optical coupler 13b on the downward optical fiber transmission path 12b. These two optical couplers 13a and 13b are connected by two optical fibers, in which there are two optical attenuators 14a and 14b respectively. A terminal station delivers main signal lights having tour multiplexed wavelengths (λ1 to λ4) and a monitoring signal light of λSV in wavelength to the upward optical fiber transmission path 12a. The monitoring signal light differs in wavelength from, and has a lower intensity than, the main signal lights. These signal lights are incident upon the 2x2 optical coupler l3a of the optical loop-back circuit 11. This optical coupler l3a causes the main signal lights and the monitoring signal light to be branched, and outputs the branched beams. The optical attenuator 14a attenuates these signal lights. These attenuated signal lights pass the 2x2 optical coupler 13b and, together with signal lights propagated via the downward fiber transmission path 12b, return to the terminal station from which they came. The broken line in FIG. 1 represents the path of the main signal lights and the monitoring signal light. The terminal station monitors the states of the optical fiber transmission path, the optical repeater and so forth by observing the returned monitoring signal light. However, it is difficult to receive properly the main signal lights on the downward optical fiber transmission path with the optical loop-back circuit of FIG. 1.

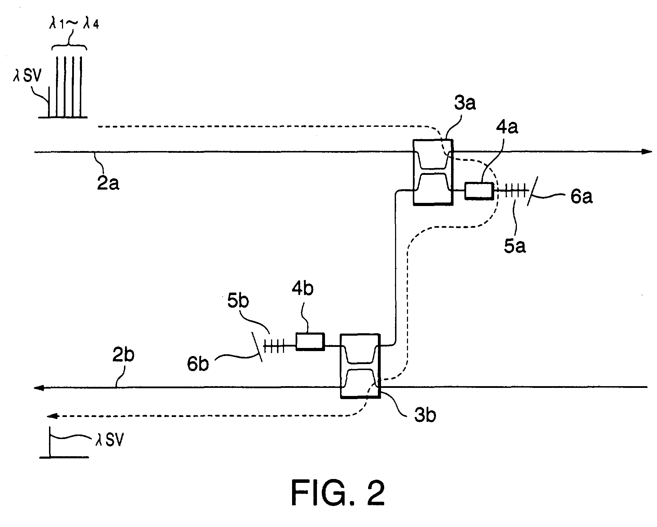

Referring now to FIG. 2, an optical coupler illustrative of the present invention is shown which has a 2x2 optical coupler 3a, an attenuator 4a, an optical grating 5a, and a reflection-free terminator 6a. The attenuator 4a, the optical grating 5a, and the reflection-free terminator 6a are connected to one of the input/output ports of the 2x2 optical coupler 3a in this order. This optical coupler branches the incident light into two beams. One branched beam is output as it is. The other is supplied to the input/output port to which the attenuator 4a is connected. This branched beam is first attenuated by the attenuator 4a. Then the optical grating 5a reflects components of a specific wavelength band of this branched beam. The reflected light, after being attenuated again by the attenuator 4a, is output from the 2x2 optical coupler 3a. Components of another wavelength band of this branched beam are propagated via the optical grating 5a, diffused by the reflection-free terminator 6a, and terminated.

FIG. 2 also shows an optical loop-back circuit for use in illustrating the invention. The optical loop-back circuit shown in Fig. 2 has an optical coupler on the upward optical fiber transmission path 2a, another optical coupler on the downward optical fiber transmission path 2b, and an optical fiber connecting these optical couplers. The basic configuration of each optical coupler is of a 2x2 optical coupler having four input/output ports. Two of the input/output ports are connected to an optical fiber transmission path, and signal lights are input to one of the two ports, and branched light beams are output from the other port. An attenuator, an optical grating, and a reflection-free terminator are connected to one of the other two ports in cascade, and from the other port an attenuated monitoring signal light is delivered to the other optical coupler. Monitoring actions on the optical fiber transmission path and so forth using this optical loop-back circuit will be described below. A terminal station delivers to the upward optical fiber transmission path 2a main signal lights whose wavelengths are λ1 to λ4 and a monitoring signal light having a different wavelength (λSV). The main signal lights and the monitoring signal light are caused to be branched by the optical coupler 3a into two branched beams. One of the branched beams is propagated as it is via the upward optical fiber transmission path. The other branched beam is attenuated by the optical attenuator 4a, and caused to be incident upon the optical grating 5a. Now, the main signal lights are propagated via the optical grating 5a, and are diffused and terminated by the reflection-free terminator 6a. On the other hand, the monitoring signal light is reflected by the optical grating 5a. The reflected monitoring signal light is again attenuated by the optical attenuator 4a and output from the optical coupler 3a. This monitoring signal light becomes incident upon the optical coupler 3b, branched, and guided to the downward fiber transmission path 2b. This monitoring signal light, together with the signal lights propagating over the downward fiber transmission path 2b, returns to the terminal station from which it came. The foregoing description of actions also holds true with regard to the main signal lights and the monitoring signal light delivered to the downward optical fiber transmission path. Since the optical loop-back circuit described above can return only the attenuated monitoring signal light to the terminal station, more precise monitoring is made possible of the optical fiber transmission path, and the optical repeater and so forth without adversely affecting the reception of the main signal lights.

Additionally, in the optical loop-back circuit described above the monitoring signal light reflected by the optical grating 5a returns to the terminal station via the upward optical fiber transmission path 2a. However, as this monitoring signal light is sufficiently attenuated, it does not adversely affect the actions of the terminal station. Where a plurality of optical loop-back circuits are to be installed on an optical fiber transmission path, monitoring signal lights are distinguished from each other according to the time at which each returns to the terminal station. The wavelengths of monitoring signal lights may be either the same or different between two opposing terminal stations. Although FIG. 2 shows the monitoring signal light of lower intensity than the main signal lights, it may have an intensity which is equal to that of the main signal lights. However, it is desirable for the monitoring signal light, when it returns to the terminal station, to have been attenuated, by 30 to 40 dB relative to the main signal lights to be received. The main signal lights and the monitoring signal light have wavelengths of approximately 1540 nm to 1565 nm with wavelength spacing of, for instance, 0.8 nm between each other. The wavelength of the monitoring signal light is selected to be either longer or shorter than all other signal lights.

For the 2x2 optical couplers described above, optical fiber couplers can be used. The optical attenuators 4a and 4b have the function of attenuating the main signal lights and the monitoring signal light at prescribed rates of attenuation, and each may have, for example, a metal-added optical fiber prepared by adding a metal to the core section of the fiber. The optical gratings 5a and 5b are designed to be able to transmit only signal lights of a predetermined wavelength range and to reflect only a monitoring signal light of another wavelength range, and may be, for instance, optical fiber gratings or optical waveguide gratings. The reflectionless terminators 6a and 6b diffuse and terminate incident light beams.

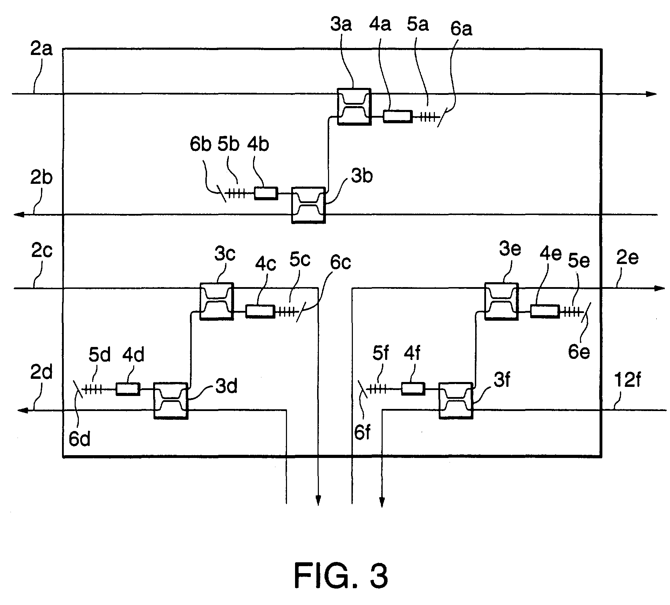

Referring now to FIG. 3, the optical loop-back circuit shown in illustration of the invention is applied to three pairs of upward and downward optical fiber transmission paths 2a to 2f which make possible communication between three different terminal stations.

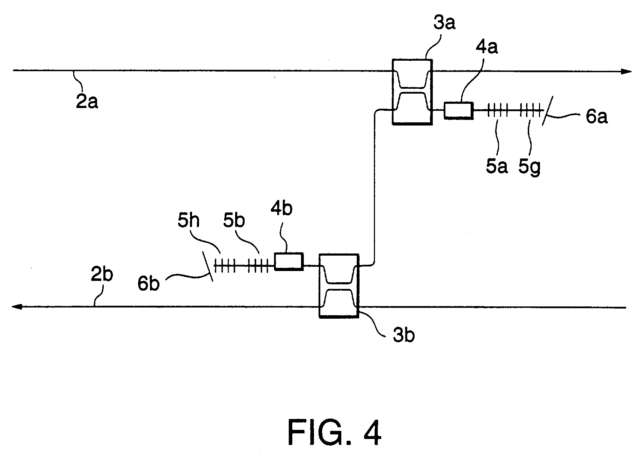

FIG. 4 illustrates optical couplers in another circuit for implementing an arrangement illustrative of the invention. Where these optical couplers are used, optical gratings 5g and 5h are further connected to the output side of the optical gratings 5a and 5b, respectively. These optical couplers make possible the use of a plurality of monitoring signal lights differing in wavelength from one another. Therefore, it is possible to monitor the optical fiber transmission paths and the like in further detail.

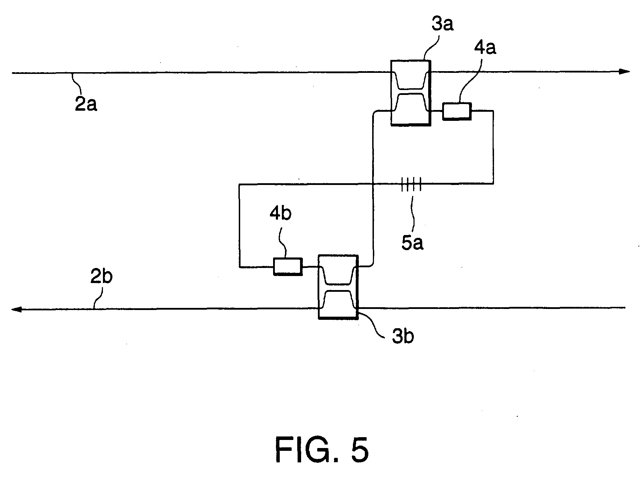

FIG. 5 illustrates an optical loop-back circuit in implementing another arrangement of the present invention. In this optical loop-back circuit, the optical attenuators 4a and 4b are connected to the same optical grating 5a. One optical grating 5a reflects every monitoring signal light delivered to the upward and downward optical fiber transmission paths. This optical loop-back circuit can have a smaller number of constituent parts than previously proposed arrangements, and accordingly can contribute to cost saving. This optical loop-back circuit requires monitoring signal lights sent by two terminal stations to have the same wavelength. Although the main signal lights transmitted by the optical grating 5a are delivered to opposing terminal stations, these main signal lights are sufficiently attenuated and therefore no adverse effect is caused at either terminal station.

As the optical coupler and the optical loop-back circuit described above in illustration of the invention by way of example enable only the monitoring signal light to be returned to the terminal station, the optical fiber transmission path, and the optical repeater and so forth can be monitored precisely without adversely affecting the reception of the main signal lights.

While the present invention has been described with reference to certain preferred arrangements by way of example, it is to be understood that variations and modifications thereof, as well as other arrangements, may be conceived within the scope of the appended claims.

## Claims

1. An optical coupler for use in branching and coupling signal lights, including an optical attenuator, and a reflecting unit for reflecting light of a specific wavelength band, wherein the optical attenuator is connected to one input/output port of the optical coupler, and the reflecting unit for reflecting light of a specific wavelength band is connected to the optical attenuator.

2. An optical coupler, as claimed in Claim 1, wherein a plurality of the reflecting units is arranged in cascade, and each reflecting unit reflects lights in a different wavelength band from the others.

3. An optical coupler, as claimed in Claim 1 or Claim 2, wherein the reflecting unit is an optical grating.

4. An optical coupler, as claimed in any one of the preceding Claims, wherein the reflecting unit is connected to a reflection-free terminator for terminating signal lights.

5. An optical coupler, as claimed in any one of the preceding Claims, wherein the optical coupler is a 2x2 optical coupler having four input/output port.

6. An optical loop-back circuit for installation on a pair of optical fiber transmission paths, the circuit including an optical coupler for installation on an upward optical fiber transmission path, an optical coupler for installation on a downward optical fiber transmission path, and an optical fiber for connecting the two optical couplers, wherein one of the input/output ports of each optical coupler is connected to an attenuator, and to the attenuator there is connected a reflecting unit for reflecting light of a specific wavelength band.

7. An optical loop-back circuit, as claimed in Claim 6, wherein one of the optical couplers is a 2x2 optical coupler having four input/output ports.

8. An optical loop-back circuit, as claimed in Claim 7, wherein each optical coupler is connected to an optical fiber transmission path at two input/output ports and to the other optical coupler at one input/output port, via an optical fiber.

9. An optical loop-back circuit, as claimed in any one of Claims 6 to 8 wherein each optical coupler causes received signal lights to be branched into two branched beams, supplies one branched signal light beam to an optical fiber transmission path, and supplies the other branched signal light beam to an input/output port to which the reflecting unit is connected.

10. An optical loop-back circuit, as claimed in any one of Claims 6 to 9 wherein the reflecting unit is connected to a reflection-free terminator for terminating the signal lights.

11. An optical loop-back circuit, as claimed in any one of Claims 6 to 10 wherein a plurality of the reflecting units is arranged in cascade, and each reflecting unit reflects light in a different wavelength band from the others.

12. An optical loop-back circuit, as claimed in any one of Claims 6 to 11 wherein the two optical couplers share one reflecting unit.

13. An optical loop-back circuit, as claimed in any one of Claims 6 to 12 wherein the reflecting unit is an optical grating.

14. Optical fiber transmission paths over which wavelength-multiplexed light beams are propagated, the paths including an upward optical fiber transmission path, a downward optical fiber transmission path, and an optical loop-back circuit arranged to cover the pair of optical fiber transmission paths, wherein the optical loop-back circuit has 2x2 optical couplers, one of which is installed in one of the optical fiber transmission paths, an optical fiber which connects the two 2x2 optical couplers, one of the input/output ports of each optical coupler being connected to an attenuator, and a reflecting unit connected to the attenuator for reflecting light in a specific wavelength band.
